# EUROPEAN PATENT SPECIFICATION

(11) **EP 2 733 907 B1**
(45) Date of publication and mention of the grant of the patent: **09.09.2015**
(21) Application number: 13192297.3
(22) Date of filing: 11.11.2013
(51) Int. Cl.: H04L 29/06

(54) **Method, local gateway, and system for local voice survivability**
Verfahren, lokales Gateway und System für lokale Sprachüberlebensfähigkeit
Procédé, passerelle locale, et un système de survie de voix locale

(30) Priority: 19.11.2012 CN 201210468126
(43) Date of publication of application: 21.05.2014
(73) Proprietor: Huawei Technologies Co., Ltd., Longgang District Shenzhen, Guangdong 518129 (CN)
(72) Inventor: FANG, Yonglong, 518129 Shenzhen (CN)
(74) Representative: Goddar, Heinz J.

(56) References cited:
- EP-A1- 2 209 283
- EP-A1- 2 302 863
- WO-A2-2008/019056

## Description

### TECHNICAL FIELD

The present invention relates to the communications field, and in particular to a method, a local gateway, and a system for local voice survivability.

### BACKGROUND

An Internet protocol (Internet protocol, IP for short) multimedia subsystem (IP multimedia subsystem, IMS for short) is a network architecture for implementing extensive network convergence. With development of communications technologies, the IMS can not only implement an initial internet telephony (voice over Internet protocol, VOIP for short) service, but also manage network resources, user resources, and application resources more efficiently, so that a user can move across various networks and use various terminals. Therefore, the IMS is applied more and more widely.

Establishment of the IMS is generally based on a public network. Such networks typically cannot provide carrier-class reliability services, and therefore network faults or device faults frequently occur, causing a failure of an IP phone to contact a central call manager and leading to a working failure of the IP phone and communications interruption of a user. To provide ability to continue local voice communications when a network is faulty, a first existing technology provides a solution: If a domain name system (domain name system, DNS for short) server exists on an IMS network and a DNS proxy (DNS proxy) is deployed on a local gateway, a domain may be configured on an IP phone, and through the DNS server, the IP phone acquires a Session Initiation Protocol (session initiation protocol, SIP for short) server of the domain and a priority of a service of the SIP server in the domain. When the DNS server returns the SIP service to the IP phone, the local gateway inserts, through the deployed DNS proxy, the SIP service of the local gateway into the service priority returned by the DNS server, and advertises them together to the IP phone. A second existing technology provides another solution: When no DNS server exists on an IMS network, multiple SIP servers may be configured on an IP phone and include a SIP service of a local gateway, with sequences of the SIP services serving as priorities. Using the foregoing two technologies, the IP phone may first select an active SIP server and then select a standby SIP server according to service priorities returned by DNS servers or according to a locally configured sequence of the SIP servers; and when all SIP servers are unavailable, the SIP service of the local gateway is selected to provide a basic local call service for the IP phone, thereby implementing failure recovery and local voice survivability.

In a process of implementing the local voice survivability, the inventor finds that at least the following problems exist in the prior art: In the solution according to the first existing technology, in order to implement local survivability, a DNS proxy needs to be configured on the local gateway, so that the SIP service of the local gateway can be inserted into the service priority returned by the DNS server, and if no DNS proxy is configured, the local survivability cannot be implemented; and in the solution according to the second existing technology, different terminals have different local gateways, which need to be configured separately and increase a deployment cost.

WO 2008/019056 discloses methods, systems and computer program products for inhibiting message traffic to an unavailable terminating SIP server. At least one list of SIP servers accessible by a call session control function (CSCF) is maintained at an originating CSCF. The list includes at least one of availability and unavailability status information for the terminating SIP servers. A request is received to contact a destination via a one of the terminating SIP servers. The list is indexed and a first terminating SIP server is identified. If the first terminating SIP server is determined to be unavailable based on information in the list a second terminating SIP is identified using the list.

EP 2 209 283 discloses a failure detection method and system operating at the session control layer, preferably within an IMS/SIP architecture, which monitors the status of an adjacent node with the aid of a timer mechanism that sets a heartbeat rate associated with that adjacent node. Monitoring of a communication session takes place by monitoring the liveliness of the nodes handling the session.

### SUMMARY

Embodiments of the present invention provide a method, an apparatus, and a system for local voice survivability, to implement local voice survivability without configuring a DNS proxy function on a local gateway or configuring a server for a user terminal.

In a first aspect, the present invention provides a method for local voice survivability, including:
detecting, by a local gateway, according to a preset detection period, an activity state of a server recorded in a server monitoring list, where the server monitoring list records a voice server on an Internet protocol IP multimedia subsystem IMS network in advance;
monitoring, by the local gateway, interaction between a user terminal and the server in the server monitoring list;
maintaining, by the local gateway, a user account and temporary user state information for the user terminal in the monitoring process, wherein the temporary user state information records time of last interaction between the user terminal and the server in the server monitoring list; intercepting, by the local gateway, when it is detected that all servers in the server monitoring list are in an unavailable state, a service data stream sent by a user terminal to the server; and providing, by a local gateway, a corresponding service response for the user terminal according to content of the intercepted service data stream and the maintained user account.

In a first possible implementation manner of the first aspect, the method further includes: stopping, by the local gateway, when it is detected that any server recorded in the server monitoring list resumes an available state, intercepting the service data stream sent by the user terminal to the server.

With reference to the first aspect or the first possible implementation manner of the first aspect, in a second possible implementation manner, the maintaining, by the local gateway, a user account and temporary user state information for the user terminal in the monitoring process includes:
deleting, by the local gateway, the user account and the temporary user state information of the user terminal if no update of the temporary user state information is detected within a preset monitoring period.

With reference to the first aspect and any possible implementation manner of the first aspect, in a third possible implementation manner, the detection period is shorter than a checking period set on the user terminal for refreshing registration.

In a second aspect, the present invention provides a local gateway, including:
a detecting unit, configured to detect, according to a preset detection period, an activity state of a server recorded in a server monitoring list, where the server monitoring list records a voice server on an Internet protocol IP multimedia subsystem IMS network in advance;
a monitoring unit, configured to monitor interaction between the user terminal and the server in the server monitoring list;
a maintaining unit, configured to maintain a user account and temporary user state information for the user terminal in the monitoring process of the monitoring unit, where the temporary user state information records time of last interaction between the user terminal and the server in the server monitoring list;
an intercepting unit, configured to intercept, when the detecting unit detects that all servers in the server monitoring list are in an unavailable state, a service data stream sent by a user terminal to the server; and
a sending unit, configured to send a corresponding service response to the user terminal according to content of the service data stream intercepted by the intercepting unit.

In a first possible implementation manner of the second aspect, the local gateway further includes:
an interception stopping unit, configured to stop, when the detecting unit detects that any server recorded in the server monitoring list resumes an available state, intercepting the service data stream sent by the user terminal to the server and the user account maintained by the maintaining unit.

With reference to the second aspect or the first possible implementation manner of the second aspect, in a second possible implementation manner, the following is further included:
the maintaining unit is specifically configured to delete the user account and the temporary user state information of the user terminal if no update of the temporary user state information is detected within a preset monitoring period.

In a third aspect, the present invention provides a system for local voice survivability, including: a local gateway, a user terminal, and a server according to the second aspect or any possible implementation manner of the second aspect, where:
the user terminal is configured to send a service data stream to the server;
the local gateway is configured to: detect, according to a preset detection period, an activity state of the server recorded in a server monitoring list; intercept, when it is detected that all servers in the server monitoring list are in an unavailable state, the service data stream sent by the user terminal to the server; and provide a corresponding service response for the user terminal according to content of the intercepted service data stream; and
the server is configured to send the service response to the user terminal.

In the method, the local gateway, and the system for local voice survivability according to the embodiments of the present invention, when it is detected that all servers in a server monitoring list are in an unavailable state, a service data stream sent by a user terminal to a server is intercepted; and a corresponding service response is provided for the user terminal according to content of the intercepted service data stream, thereby implementing local voice survivability of the user terminal. In this way, no matter whether a DNS proxy function is configured on the local gateway or whether a server is configured on the user terminal, the local voice survivability may be implemented and in this process the user terminal is not aware of a local voice survivability process.

### BRIEF DESCRIPTION OF DRAWINGS

To illustrate the technical solutions in the embodiments of the present invention or in the prior art more clearly, the following briefly introduces the accompanying drawings required for describing the embodiments or the prior art. Apparently, the accompanying drawings in the following description show merely some embodiments of the present invention, and a person of ordinary skill in the art may still derive other drawings from these accompanying drawings without creative efforts.
FIG. 1 is a flowchart of a method for local voice survivability according to an embodiment of the present invention;
FIG. 2 is a flowchart of another method for local voice survivability according to an embodiment of the present invention;
FIG. 3 is a flowchart of another method for local voice survivability according to an embodiment of the present invention;
FIG. 4 is a schematic diagram of composition of a local gateway according to an embodiment of the present invention;
FIG. 5 is a schematic diagram of composition of another local gateway according to an embodiment of the present invention;
FIG. 6 is a schematic structural diagram of a local gateway according to an embodiment of the present invention; and
FIG. 7 is a schematic diagram of composition of a system for local voice survivability according to an embodiment of the present invention.

### DESCRIPTION OF EMBODIMENTS

The following clearly and completely describes the technical solutions in the embodiments of the present invention with reference to the accompanying drawings in the embodiments of the present invention. Apparently, the described embodiments are merely a part rather than all of the embodiments of the present invention. All other embodiments obtained by a person of ordinary skilled in the art based on the embodiments of the present invention without creative efforts shall fall within the protection scope of the present invention.

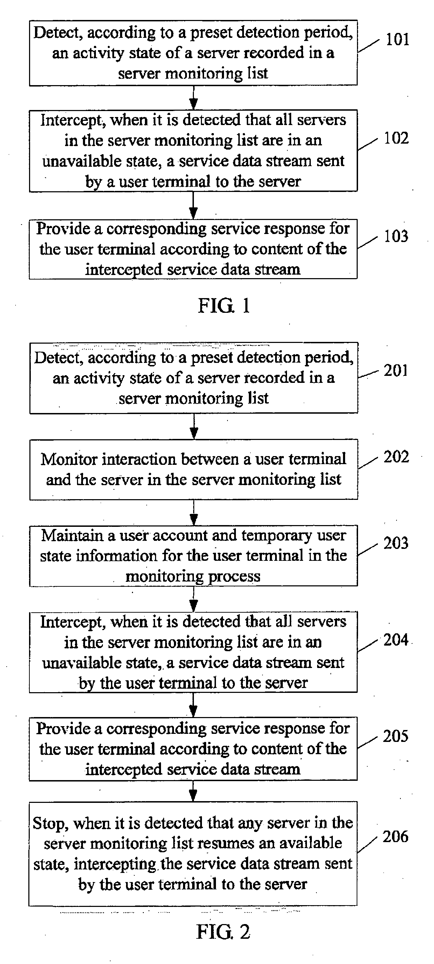

An embodiment of the present invention provides a method for local voice survivability. As shown in FIG. 1, the method may include the following steps:
101. Detect, according to a preset detection period, an activity state of a server recorded in a server monitoring list.

Specifically, a local gateway detects, according to a preset detection period, an activity state of a server recorded in a server monitoring list saved on the local gateway. In this embodiment of the present invention, a server monitoring list is saved on the local gateway, and the server monitoring list records voice servers on an IMS network, all of which have capability to provide a voice service response for a user terminal. The local gateway may detect activity states of all servers in the server monitoring list periodically according to records in the server monitoring list and according to the preset detection period.

The local gateway may detect, in turn or in parallel, the activity states of all servers recorded in the server monitoring list. Preferably, the activity states of all servers in the server monitoring list may be detected in parallel, and this is not limited in this embodiment of the present invention.

102. Intercept, when it is detected that all servers in the server monitoring list are in an unavailable state, a service data stream sent by a user terminal to the server.

When it is detected that all servers in the server monitoring list are in an unavailable state, the local gateway intercepts a service data stream sent by a user terminal to the server.

Alternatively, in this embodiment, the local gateway may configure a local interception proxy function, which is in a disabled state by default. When the local gateway detects that all servers in the server monitoring list are in the unavailable state, the local gateway enables the local interception proxy function.

103. Provide a corresponding service response for the user terminal according to content of the intercepted service data stream.

After intercepting the service data stream sent by the user terminal to the server, the local gateway provides a corresponding service response for the user terminal according to content of the service data stream, where the service response may be a registration response provided for the user terminal, or may also be a voice service response provided for the user terminal. For example, after intercepting a registration request sent by the user terminal to the server in the server monitoring list, the local gateway provides a registration response for the user terminal according to the registration request, thereby implementing local voice survivability for the user terminal. In addition, compared with the prior art, in the process of intercepting the service data stream sent by the user terminal and replying with a corresponding response according to the content of the service data stream, the user terminal is not aware of a local voice survivability process.

In the method for local voice survivability according to this embodiment of the present invention, when it is detected that all servers in a server monitoring list are in an unavailable state, a service data stream sent by a user terminal to a server is intercepted; and a corresponding service response is provided for the user terminal according to content of the intercepted service data stream, thereby implementing local voice survivability of the user terminal. In this way, no matter whether a DNS proxy function is configured on the local gateway or whether a server is configured on the user terminal, the local voice survivability may be implemented and in this process the user terminal is not aware of a local voice survivability process.

An embodiment of the present invention provides a method for local voice survivability. To facilitate understanding of a person of skilled in the art, this embodiment of the present invention is introduced by using an IP phone as a user terminal and using a SIP server as a server. As shown in FIG. 2, the method may include the following steps:
201. Detect, according to a preset detection period, an activity state of a server recorded in a server monitoring list.

It may be understood that, a server on a network is generally fixed. Therefore, a local gateway may maintain a server monitoring list, and add an IP address of a server capable of providing a voice service on an IMS network to the server monitoring list in advance, and then the local gateway may detect an activity state of the server recorded in the server monitoring list. The local gateway may set a detection period in advance. For example, a SIP server exists on the IMS network, and then the detection period may be set to 3 seconds. When an IP phone interacts with the SIP server recorded in the server monitoring list, the local gateway may detect an activity state of the SIP server every 3 seconds in multiple detection manners such as a routing state, a SIP interaction response state, option (option) detection, and registration (register) detection. If a route of the SIP server is unreachable or the detection fails, it indicates that the SIP server is in an unavailable state; or if a response packet from the SIP server is received, it indicates that the SIP server is still in an available state.

Alternatively, the detection period preset on the local gateway is shorter than a checking period set on a user terminal for refreshing registration. In this embodiment of the present invention, the user terminal may set a checking period to refresh registration regularly according to the prior art, so as to check whether the server is in the available state, and the local gateway presets a detection period shorter than the checking period of the user terminal to detect the activity state of the server. In this way, the local gateway can detect, ahead of the user terminal, that the server is unavailable, and implement local voice survivability while the user terminal is unaware of the local voice survivability.

202. Monitor interaction between a user terminal and the server in the server monitoring list.

When the user terminal interacts with the server in the server monitoring list, the local gateway may monitor the interaction between the user terminal and the server and obtain user information in the interaction process. For example, when an IP phone has a service requirement, the IP phone needs to be powered on and initialized first, and then initiates a registration request to the SIP server. In this case, because the local gateway is an egress gateway of the IP phone, the local gateway can acquire all data during the registration.

203. Maintain a user account and temporary user state information for the user terminal in the monitoring process.

The local gateway maintains the user account and temporary user state information for the user terminal according to user information obtained in the process of monitoring the interaction between the user terminal and the server, where the temporary user state information records time of last interaction between the user terminal and the server. In this way, when all servers are unavailable, the local gateway may serve the user terminal according to the maintained user account and temporary user state information. Therefore, the following problem with the prior art is resolved: when account information of all users is manually configured in advance on the local gateway, a configuration workload is large and a deployment cost is high.

The maintaining, by the local gateway, a user account and temporary user state information for the user terminal includes: saving the user account and the temporary user state information according to the user information obtained in the monitoring process. Further, alternatively the local gateway may check, within a preset monitoring period, whether the temporary user state information is updated; and, if no update is made, delete the user account and the temporary user state information of the user terminal. The maintaining, by the local gateway, a user account and temporary user state information for the user terminal further includes: deleting the user account and the temporary user state information of the user terminal if no update of the temporary user state information is detected within the preset monitoring period.

Alternatively, the local gateway may maintain a user state information table, where the user state information table includes the user account and the temporary user state information. The local gateway may save the user account and the temporary user state information into the user state information table according to the user information obtained in the monitoring process, so as to maintain a user account and temporary user state information for each user terminal. Further, when no update of the temporary user state information is detected within the preset monitoring period, the local gateway may delete the user account and the temporary user state information of the user terminal from the user state information table, so that it may be ensured that user information on the local gateway is timely updated and synchronized.

It should be noted that the user state information table may be created in advance on the local gateway, or may be created in the monitoring process, and this is not limited in the embodiment of the present invention.

204. Intercept, when it is detected that all servers in the server monitoring list are in the unavailable state, a service data stream sent by the user terminal to the server.

When it is detected that all servers in the server monitoring list are in the unavailable state, the local gateway may intercept a service data stream sent by the user terminal to the server. Alternatively, a local interception proxy function may be configured on the local gateway; and in this case, when it is detected that all servers in the server monitoring list are unavailable, the local gateway may enable the local interception proxy function to intercept the service data stream sent by the user terminal to the server. It may be understood that, in a process in which the user terminal implements the local voice survivability, the user terminal may refresh registration regularly according to a set checking period to check whether a server currently serving the user terminal is still in the available state. In this embodiment of the present invention, the local gateway may set a detection period shorter than the checking period of the user terminal, to detect whether the server on the network is in the available state. In this way, before the user terminal detects that all servers on the network are unavailable, the local gateway can learn that all servers on the network are in the unavailable state; and when it is detected that all servers on the network are in the unavailable state, intercept the service data stream sent by the user terminal to the server, thereby implementing local voice survivability while a user is unaware of the local voice survivability.

205. Provide a corresponding service response for the user terminal according to content of the intercepted service data stream.

After the local gateway detects that all servers are in the unavailable state and intercepts the service data stream sent by the user terminal to the server, the local gateway may provide a corresponding service response for the user terminal according to content of the intercepted service data stream and the maintained user account, and enter a local voice survivability state. For example, if the service data stream intercepted by the local gateway is a registration request, a registration response is returned to the user terminal; or if the service data stream intercepted by the local gateway is a call request, a corresponding call response is provided for the user terminal.

In this embodiment of the present invention, the local gateway records a server capable of providing the voice service on the IMS network in advance, and detects whether the recorded server is in the unavailable state; and when all servers on the network are in the unavailable state, the local gateway intercepts the service data stream sent by the user terminal to the server, and simulates the server to provide a service response for the user terminal, thereby implementing local voice survivability. In this way, no matter whether a DNS proxy function is configured on the local gateway or whether a server is configured on the user terminal, the local voice survivability may be implemented and in this process the user terminal is not aware of a local voice survivability process. In this way, the following problem with the prior art is resolved: The local voice survivability depends on the DNS proxy function configured on the local gateway, or a deployment cost is taken to configure servers on user terminals so as to implement the local voice survivability.

206. Stop, when it is detected that any server recorded in the server monitoring list resumes the available state, intercepting the service data stream sent by the user terminal to the server.

When the local gateway simulates the server to provide a service response for the user terminal, the local gateway continues detecting the activity state of the server in the server monitoring list according to the preset detection period; and, when it is detected that any server recorded in the server monitoring list resumes the available state, the local gateway stops intercepting the service data stream sent by the user terminal to the server, so that the user terminal continues to receive a service response of the server.

Specifically, when the local gateway find detects that any server recorded in the server monitoring list resumes the available state, the local gateway stops intercepting the service data stream sent by the user terminal to the server. When the local gateway has just intercepted the service data stream sent by the user terminal to a connected server but does not provide the corresponding service response for the user terminal, the local gateway may forward the intercepted service data stream to a connected server; and if the connected server is a server that resumes the available state, the connected server provides the corresponding service response for the user terminal according to the service data stream; or if the connected server is not a server that resumes the available state, the user terminal may send the service data stream to other servers in turn by refreshing registration until a server that resumes the available state returns a service response, where the connected server is a server that provides a service response for the user terminal before all servers in the server monitoring list are unavailable.

Alternatively, if the interception proxy function is configured on the local gateway, when it is detected that any server recorded in the server monitoring list resumes the available state, the local gateway may disable the local interception proxy function, so as to stop intercepting the service data stream sent by the user terminal to the server.

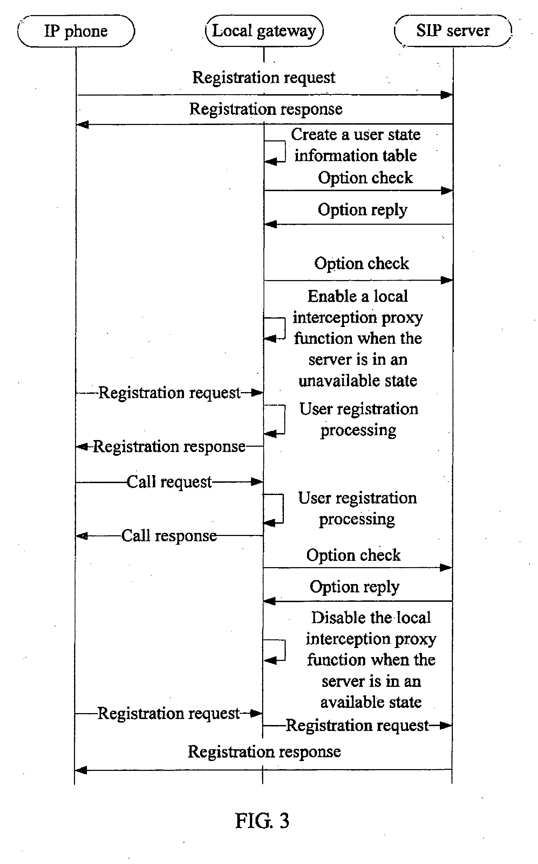

For example, it is assumed that only one SIP server exists on an IMS network. As shown in FIG. 3, when an IP phone has a service requirement, the IP phone sends a registration request to the SIP server first. At this time, the SIP server is in the available state, and replies with a registration response to the IP phone. In a registration process, the local gateway may obtain all data in the registration process, and save user information in the obtained data into a user state information table, where the user state information table may include a user account and temporary user state information. In this case, the local gateway may detect an activity state of the SIP server in an option detection manner according to a preset detection period. Specifically, an option check message is sent to the SIP server. If an option reply message of the SIP server is received, it is considered that the SIP server is in the available state, and the IP phone may continue to interact with the SIP server, or if no option reply message of the SIP server is received, it may be considered that the SIP server is in the unavailable state. Further, alternatively the number of detection times may be set, so that the local gateway considers the SIP server is in the unavailable state only when the local gateway does not receive an option reply message after sending the option check message to the SIP server three consecutive times. The local gateway may enable the local interception proxy function when detecting that the SIP server is in the unavailable state.

In a communications process, the IP phone checks whether the SIP server is in the available state by refreshing registration regularly according to the set checking period. Therefore, the local gateway may intercept a registration request sent by the IP phone to the server. In this case, the local gateway simulates the SIP server to perform user registration processing and reply with a corresponding registration response. Alternatively, the local gateway may intercept a call request sent by the IP phone to the SIP server, and in this case, the local gateway returns a corresponding call response. When the local gateway detects that the SIP server resumes the available state, the local gateway disables the local interception proxy function, and forwards the intercepted registration request or call request to the SIP server, so that the SIP server provides a corresponding service response for the IP phone, and the IP phone can work normally. It should be noted that the detection period set on the local gateway is shorter than the checking period set on the IP phone. Therefore, before the IP phone detects that the SIP server is unavailable, the local gateway has already detected that the SIP server is unavailable and intercepts the service data stream sent by the IP phone to the SIP server, thereby implementing local voice survivability while the IP phone is unaware of the local voice survivability.

In the method for local voice survivability according to the embodiment of the present invention, when it is detected that all servers in a server monitoring list are in an unavailable state, a service data stream sent by a user terminal to a server is intercepted; and a corresponding service response is provided for the user terminal according to content of the intercepted service data stream, thereby implementing local voice survivability of the user terminal. In this way, no matter whether a DNS proxy function is configured on the local gateway or whether a server is configured on the user terminal, the local voice survivability may be implemented and in this process the user terminal is not aware of a local voice survivability process.

In addition, a user account and temporary user state information are created by monitoring a process of interaction between the user terminal and the server and by regularly checking an update of the temporary user state information. In this way, a workload of manual configuration may be reduced and user information is updated and synchronized.

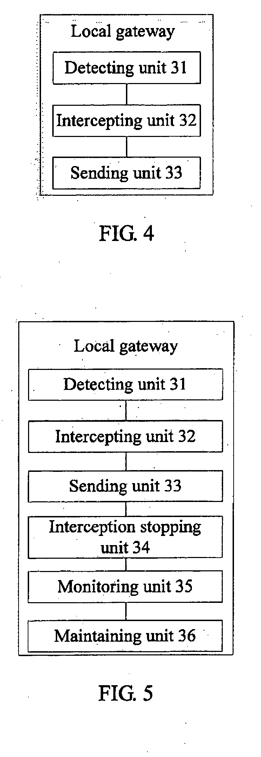

An embodiment of the present invention provides a local gateway, configured to implement the method for local voice survivability shown in FIG. 1 to FIG. 3 in the present invention. As shown in FIG. 4, the local gateway includes: a detecting unit 31, an intercepting unit 32, and a sending unit 33.

The detecting unit 31 is configured to detect, according to a preset detection period, an activity state of a server recorded in a server monitoring list, where the server monitoring list records a voice server on an Internet protocol IP multimedia subsystem IMS network in advance.

The intercepting unit 32 is configured to intercept, when the detecting unit 31 detects that all servers in the server monitoring list are in an unavailable state, a service data stream sent by a user terminal to the server.

The sending unit 33 is configured to send a corresponding service response to the user terminal according to content of the service data stream intercepted by the intercepting unit 32.

The local gateway may be a router, a switch, or the like.

Further, as shown in FIG. 5, the local gateway may further include an interception stopping unit 34, a monitoring unit 35, and a maintaining unit 36.

The interception stopping unit 34 is configured to stop, when the detecting unit 31 detects that any server recorded in the server monitoring list resumes an available state, intercepting the service data stream sent by the user terminal to the server.

The monitoring unit 35 is configured to monitor interaction between the user terminal and the server in the server monitoring list.

The maintaining unit 36 is configured to maintain a user account and temporary user state information for the user terminal in a process of the monitoring performed by the monitoring unit 35, where the temporary user state information records time of last interaction between the user terminal and the server in the server monitoring list. Specifically, the maintaining unit 36 is configured to save the user account and the temporary user state information according to user information obtained in the monitoring process. Alternatively, the maintaining unit 36 is further configured to delete the user account and the temporary user state information of the user terminal if no update of the temporary user state information is detected within a preset monitoring period.

Alternatively, the local gateway may maintain a user state information table, where the user state information table includes the user account and the temporary user state information. It should be noted that the user state information table may be created in advance on the local gateway, or may be created in the monitoring process, and this is not limited in this embodiment of the present invention. The maintaining unit 36 is specifically configured to save the user account and the temporary user state information into the user state information table according to the user information obtained in the monitoring process, so as to maintain a user account and temporary user state information for each user terminal. Further, alternatively the maintaining unit 36 is further specifically configured to: delete, when no update of the temporary user state information is detected within the preset monitoring period, the user account and the temporary user state information of the user terminal from the user state information table, so that it may be ensured that user information on the local gateway is timely updated and synchronized.

Further, the detection period is shorter than a checking period set on the user terminal for refreshing registration.

In the local gateway according to this embodiment of the present invention, when it is detected that all servers in a server monitoring list are in an unavailable state, a service data stream sent by a user terminal to a server is intercepted; and a corresponding service response is provided for the user terminal according to content of the intercepted service data stream, thereby implementing local voice survivability of the user terminal. In this way, no matter whether a DNS proxy function is configured on the local gateway or whether a server is configured on the user terminal, the local voice survivability may be implemented and in this process the user terminal is not aware of a local voice survivability process.

In addition, a user account and temporary user state information are created by monitoring a process of interaction between the user terminal and the server and by regularly checking an update of the temporary user state information. In this way, a workload of manual configuration may be reduced and user information is updated and synchronized.

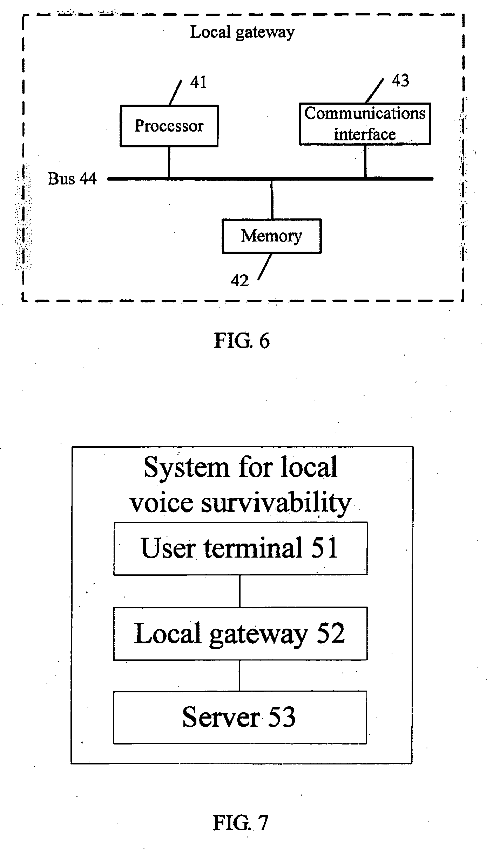

An embodiment of the present invention provides a local gateway. As shown in FIG. 6, the local gateway includes: a processor 41, a memory 42, a communications interface 43, and a bus 44. The processor 41, the memory 42, and the communications interface 43 are connected to each other through the bus 44. The memory 42 is configured to store program codes, where the program codes include a computer operation instruction.

The memory 42 may be a high-speed random access memory, or may be a non-volatile memory (non-volatile memory), for example, at least one disk memory.

The processor 41 executes the program codes, and is configured to: detect, according to a preset detection period, an activity state of a server recorded in a server monitoring list, where the server monitoring list records a voice server on an IMS network in advance; intercept, when it is detected that all servers in the server monitoring list are in an unavailable state, a service data stream sent by a user terminal to the server; and send a corresponding service response to the user terminal according to content of the intercepted service data stream. Further, the processor 41 is configured to stop, when it is detected that any server recorded in the server monitoring list resumes an available state, intercepting the service data stream sent by the user terminal to the server.

Further, the processor 41 is configured to: monitor interaction between the user terminal and the server in the server monitoring list; maintain a user account and temporary user state information for the user terminal in the monitoring process, where the temporary user state information records time of last interaction between the user terminal and the server in the server monitoring list; and delete the user account and the temporary user state information of the user terminal if no update of the temporary user state information is detected within a preset monitoring period.

Alternatively, the local gateway may maintain a user state information table, where the user state information table includes the user account and the temporary user state information. The memory 42 is further configured to save the user state information table.

The processor 41 is specifically configured to save the user account and the temporary user state information into the user state information table according to user information obtained in the monitoring process; and is further specifically configured to delete the user account and the temporary user state information of the user terminal from the user state information table if no update of the temporary user state information is detected within the preset monitoring period.

Further, the detection period is shorter than a checking period set on the user terminal for refreshing registration.

In the local gateway according to the embodiment of the present invention, when it is detected that all servers in a server monitoring list are in an unavailable state, a service data stream sent by a user terminal to a server is intercepted; and a corresponding service response is provided for the user terminal according to content of the intercepted service data stream, thereby implementing local voice survivability of the user terminal. In this way, no matter whether a DNS proxy function is configured on the local gateway or whether a server is configured on the user terminal, the local voice survivability may be implemented and in this process the user terminal is not aware of a local voice survivability process.

In addition, a user account and temporary user state information are created by monitoring a process of interaction between the user terminal and the server and by regularly checking an update of the temporary user state information. In this way, a workload of manual configuration may be reduced while at the same time user information is updated and synchronized.

An embodiment of the present invention provides a system for local voice survivability. As shown in FIG. 7, the system includes: a user terminal 51, a local gateway 52 according to any one of the embodiments shown in FIG 4 to FIG. 6, and a server 53, where the system may include one or more servers 53;
the user terminal 51 is configured to send a service data stream to the server 53;
the local gateway 52 is configured to: detect, according to a preset detection period, an activity state of the server 53 in a server monitoring list; intercept, when it is detected that all servers 53 in the server monitoring list are in an unavailable state, a service data stream sent by the user terminal 51 to the server 53; and provide a corresponding service response for the user terminal 51 according to content of the intercepted service data stream; and
the server 53 is configured to send the service response to the user terminal 51.

The user terminal may be an IP phone, a SIP phone, or the like.

The server may be a SIP server, or the like.

In the system for local voice survivability according to this embodiment of the present invention, when it is detected that all servers in a server monitoring list are in an unavailable state, a service data stream sent by a user terminal to a server is intercepted; and a corresponding service response is provided for the user terminal according to content of the intercepted service data stream, thereby implementing local voice survivability of the user terminal. In this way, no matter whether a DNS proxy function is configured on the local gateway or whether a server is configured on the user terminal, the local voice survivability may be implemented and in this process the user terminal is not aware of a local voice survivability process.

In addition, a user account and temporary user state information are created by monitoring a process of interaction between the user terminal and the server and by regularly checking an update of the temporary user state information. In this way, a workload of manual configuration may be reduced and user information is updated and synchronized.

Through the foregoing description of the embodiments, it is clear to a person skilled in the art that the present invention may be implemented by software plus necessary universal hardware, and certainly may also be implemented by hardware, but in many cases, the software implementation is preferred. Based on such an understanding, the technical solutions of the present invention essentially, or the part contributing to the prior art may be implemented in the form of a software product. The computer software product is stored in a readable memory medium, for example, a floppy disk, a hard disk, or an optical disk of the computer, and includes several instructions for instructing a computer device (which may be a personal computer, a server, a network device, or the like) to perform the methods described in the embodiments of the present invention.

The foregoing descriptions are merely specific embodiments of the present invention, but are not intended to limit the protection scope of the present invention. Any variation or replacement readily figured out by a person skilled in the art within the technical scope disclosed in the present invention shall fall within the protection scope of the present invention. Therefore, the protection scope of the present invention shall be subject to the protection scope of the claims.

## Claims

1. A method for local voice survivability, comprising:
detecting (101), by a local gateway, according to a preset detection period, an activity state of a server recorded in a server monitoring list, wherein the server monitoring list records a voice server on an Internet protocol, IP, multimedia subsystem, IMS, network in advance;
monitoring (202), by the local gateway, interaction between a user terminal and the server in the server monitoring list;
maintaining (203), by the local gateway, a user account and temporary user state information for the user terminal in the monitoring process, wherein the temporary user state information records time of last interaction between the user terminal and the server in the server monitoring list;
intercepting (102), by the local gateway, when it is detected that all servers in the server monitoring list are in an unavailable state, a service data stream sent by the user terminal to the server; and
providing (103), by the local gateway, a corresponding service response for the user terminal according to content of the intercepted service data stream and the maintained user account.

2. The method for local voice survivability according to claim 1, further comprising:
stopping (206), by the local gateway, when it is detected that any server recorded in the server monitoring list resumes an available state, intercepting the service data stream sent by the user terminal to the server.

3. The method for local voice survivability according to claim 1 or 2, wherein the maintaining, by the local gateway, a user account and temporary user state information for the user terminal in the monitoring process comprises:
deleting, by the local gateway, the user account and the temporary user state information of the user terminal if no update of the temporary user state information is detected within a preset monitoring period.

4. The method for local voice survivability according to any one of claims 1 to 3, wherein the detection period is shorter than a checking period set on the user terminal for refreshing registration.

5. A local gateway, comprising:
a detecting unit (31), configured to detect, according to a preset detection period, an activity state of a server recorded in a server monitoring list, wherein the server monitoring list records a voice server on an Internet protocol IP multimedia subsystem IMS network in advance;
a monitoring unit (35), configured to monitor interaction between a user terminal and the server in the server monitoring list;
a maintaining unit (36), configured to maintain a user account and temporary user state information for the user terminal in a process of the monitoring performed by the monitoring unit, wherein the temporary user state information records time of last interaction between the user terminal and the server in the server monitoring list;
an intercepting unit (32), configured to intercept, when the detecting unit detects that all servers in the server monitoring list are in an unavailable state, a service data stream sent by the user terminal to the server; and
a sending unit (33), configured to send a corresponding service response to the user terminal according to content of the service data stream intercepted by the intercepting unit and the user account maintained by the maintaining unit.

6. The local gateway according to claim 5, further comprising:
an interception stopping unit (34), configured to stop, when the detecting unit detects that any server recorded in the server monitoring list resumes an available state, intercepting the service data stream sent by the user terminal to the server.

7. The local gateway according to claim 5 or 6, wherein the maintaining unit is specifically configured to delete the user account and the temporary user state information of the user terminal if no update of the temporary user state information is detected within a preset monitoring period.

8. A system for local voice survivability, comprising:
a local gateway (52) according to any one of claims 5 to 7;
a user terminal (51); and
a server (53), wherein:
the user terminal is configured to send a service data stream to the server; and
the server is configured to send a service response to the user terminal.

## Patentansprüche

1. Verfahren zur lokalen Sprachüberlebensfähigkeit, das die folgenden Schritte aufweist:
Ermitteln (101) durch ein lokales Gateway gemäß einer voreingestellten Ennittlungsperiode eines Aktivitätszustands eines Servers, der in einer Serverüberwachungsliste aufgezeichnet ist, wobei die Serverüberwachungsliste einen Sprachserver auf einem Internet-Protokoll-, IP, Multimedia-Subsystem-Netzwerk, IMS-Netzwerk, im Voraus aufzeichnet;
Überwachen (202) durch das lokale Gateway einer Interaktion zwischen einem Benutzerendgerät und dem Server in der Serverüberwachungsliste;
Pflegen (203) durch das lokale Gateway eines Benutzerkontos und von vorübergehenden Benutzerzustandsinformationen für das Benutzerendgerät im Überwachungsprozess, wobei die vorübergehenden Benutzerzustandsinformationen die Zeit der letzten Interaktion zwischen dem Benutzerendgerät und dem Server in der Serverüberwachungsliste aufzeichnen;
Abfangen (102) durch das lokale Gateway, wenn ermittelt wird, dass sich alle Server in der Serverüberwachungsliste in einem nicht verfügbaren Zustand befinden, eines Dienstdatenstroms, der durch das Benutzerendgerät an den Server gesendet wird; und Bereitstellen (103) durch das lokale Gateway einer entsprechenden Dienstantwort für das Benutzerendgerät gemäß dem Inhalt des abgefangenen Dienstdatenstroms und dem gepflegten Benutzerkonto.

2. Verfahren zur lokalen Sprachüberlebensfähigkeit nach Anspruch 1, das ferner aufweist:
Stoppen (206) durch das lokale Gateway, wenn ermittelt wird, dass irgendein Server, der in der Serverüberwachungsliste aufgezeichnet ist, einen verfügbaren Zustand wiedererlangt, des Abfangens des Dienstdatenstroms, der durch das Benutzerendgerät an den Server gesendet wird.

3. Verfahren zur lokalen Sprachüberlebensfähigkeit nach Anspruch 1 oder 2, wobei das Pflegen durch das lokale Gateway eines Benutzerkontos und von vorübergehenden Benutzerzustandsinformationen für das Benutzerendgerät im Überwachungsprozess aufweist:
Löschen durch das lokale Gateway des Benutzerkontos und der vorübergehenden Benutzerzustandsinformationen des Benutzerendgeräts, wenn keine Aktualisierung der vorübergehenden Benutzerzustandsinformationen innerhalb einer voreingestellten Überwachungsperiode ermittelt wird.

4. Verfahren zur lokalen Sprachüberlebensfähigkeit nach einem der Ansprüche 1 bis 3, wobei die Ermittlungsperiode kürzer als eine Prüfperiode ist, die am Benutzerendgerät zum Auffrischen der Registrierung eingestellt ist.

5. Lokales Gateway, das Folgendes aufweist:
eine Ermittlungseinheit (31), die konfiguriert ist, gemäß einer voreingestellten Ermittlungsperiode einen Aktivitätszustand eines Servers zu ermitteln, der in einer Serverüberwachungsliste aufgezeichnet ist, wobei die Serverüberwachungsliste einen Sprachserver auf einem Internet-Protokoll-, IP, Multimedia-Subsystem-Netzwerk, IMS-Netzwerk, im Voraus aufzeichnet;
eine Überwachungseinheit (35), die konfiguriert ist, eine Interaktion zwischen einem Benutzerendgerät und dem Server in der Serverüberwachungsliste zu überwachen;
eine Pflegeeinheit (36), die konfiguriert ist, ein Benutzerkonto und vorübergehende Benutzerzustandsinformationen für das Benutzerendgerät in einem Prozess des Überwachens zu pflegen, der durch die Überwachungseinheit durchgeführt wird, wobei die vorübergehenden Benutzerzustandsinformationen die Zeit der letzten Interaktion zwischen dem Benutzerendgerät und dem Server in der Serverüberwachungsliste aufzeichnen;
eine Abfangeinheit (32), die konfiguriert ist, wenn die Ermittlungseinheit ermittelt, dass sich alle Server in der Serverüberwachungsliste in einem nicht verfügbaren Zustand befinden, einen Dienstdatenstrom abzufangen, der durch das Benutzerendgerät an den Server gesendet wird; und
eine Sendeeinheit (33), die konfiguriert ist, eine entsprechende Dienstantwort an das Benutzerendgerät gemäß dem Inhalt des Dienstdatenstroms, der durch die Abfangeinheit abgefangen wird, und dem Benutzerkonto zu senden, das durch die Pflegeeinheit gepflegt wird.

6. Lokales Gateway nach Anspruch 5, die ferner aufweist:
eine Abfangstoppeinheit (34), die konfiguriert ist, wenn die Ermittlungseinheit ermittelt, dass irgendein Server, der in der Serverüberwachungsliste aufgezeichnet ist, einen verfügbaren Zustand wiedererlangt, das Abfangen des Dienstdatenstroms zu stoppen, der durch das Benutzerendgerät an den Server gesendet wird.

7. Lokales Gateway nach Anspruch 5 oder 6, wobei die Pflegeeinheit insbesondere konfiguriert ist, das Benutzerkonto und die vorübergehenden Benutzerzustandsinformationen des Benutzerendgeräts zu löschen, wenn keine Aktualisierung der vorübergehenden Benutzerzustandsinformationen innerhalb einer voreingestellten Uberwachungsperiode ermittelt wird.

8. System zur lokalen Sprachüberlebensfähigkeit, das Folgendes aufweist:
ein lokales Gateway (52) nach einem der Ansprüche 5 bis 7;
ein Benutzerendgerät (51); und
einen Server (53), wobei:
das Benutzerendgerät konfiguriert ist, einen Dienstdatenstrom an den Server zu senden; und
der Server konfiguriert ist, eine Dienstantwort an das Benutzerendgerät zu senden.

## Revendications

1. Procédé pour la survie de voix locales, comprenant :
la détection (101), par une passerelle locale, conformément à une période de détection prédéterminée, d'un état d'activité d'un serveur enregistré dans une liste de surveillance des serveurs, dans lequel la liste de surveillance des serveurs enregistre à l'avance un serveur vocal sur un réseau à sous-système multimédia, IMS, sur protocole Internet, IP ;
la surveillance (202), par la passerelle locale, de l'interaction entre un terminal utilisateur et le serveur de la liste de surveillance des serveurs ;
le maintien (203), par la passerelle locale, d'un compte utilisateur et d'informations d'état d'utilisateur temporaires pour le terminal utilisateur dans le processus de surveillance, dans lequel les informations d'état d'utilisateur temporaires enregistrent l'instant de la dernière interaction entre le terminal utilisateur et le serveur dans la liste de surveillance des serveurs ;
l'interception (102), par la passerelle locale, lorsqu'il est détecté que tous les serveurs de la liste de surveillance des serveurs sont dans un état indisponible, d'un flux de données de service envoyé par le terminal utilisateur au serveur ; et
la fourniture (103), par la passerelle locale, d'une réponse de service correspondante pour le terminal utilisateur conformément au contenu du flux de données de service intercepté et au compte utilisateur maintenu.

2. Procédé pour la survie de voix locales selon la revendication 1, comprenant en outre :
l'arrêt (206), par la passerelle locale, lorsqu'il est détecté qu'un serveur quelconque enregistré dans la liste de surveillance des serveurs reprend un état disponible, de l'interception du flux de données de service envoyé par le terminal utilisateur au serveur.

3. Procédé pour la survie de voix locales selon la revendication 1 ou 2, dans lequel le maintien, par la passerelle locale, d'un compte utilisateur et d'informations d'état d'utilisateur temporaires pour le terminal utilisateur dans le processus de surveillance comprend :
la suppression, par la passerelle locale, du compte utilisateur et des informations d'état d'utilisateur temporaires du terminal utilisateur si aucune mise à jour des informations d'état d'utilisateur temporaires n'est détectée au cours d'une période de surveillance prédéfinie.

4. Procédé pour la survie de voix locales selon l'une quelconque des revendications 1 à 3, dans lequel la période de détection est plus courte qu'une période de vérification définie sur le terminal utilisateur pour l'actualisation de l'enregistrement.

5. Passerelle locale, comprenant :
une unité de détection (31), configurée pour détecter, conformément à une période de détection prédéterminée, un état d'activité d'un serveur enregistré dans une liste de surveillance des serveurs, dans lequel la liste de surveillance des serveurs enregistre à l'avance un serveur vocal sur un réseau à sous-système multimédia IMS sur protocole Internet IP ;
une unité de surveillance (35), configurée pour surveiller l'interaction entre un terminal utilisateur et le serveur de la liste de surveillance des serveurs ;
une unité de maintien (36), configurée pour maintenir un compte utilisateur et des informations d'état d'utilisateur temporaires pour le terminal utilisateur dans un processus de la surveillance effectuée par l'unité de surveillance, dans lequel les informations d'état d'utilisateur temporaires enregistrent l'instant de la dernière interaction entre le terminal utilisateur et le serveur dans la liste de surveillance des serveurs ;
une unité d'interception (32), configurée pour intercepter, lorsque l'unité de détection détecte que tous les serveurs de la liste de surveillance des serveurs sont dans un état indisponible, un flux de données de service envoyé par le terminal utilisateur au serveur ; et
une unité d'envoi (33), configurée pour envoyer une réponse de service correspondant au terminal utilisateur conformément au contenu du flux de données de service intercepté par l'unité d'interception et au compte utilisateur maintenu par l'unité de maintien.

6. Passerelle locale selon la revendication 5, comprenant en outre :
une unité d'arrêt de l'interception (34), configurée pour arrêter, lorsque l'unité de détection détecte qu'un serveur quelconque enregistré dans la liste de surveillance des serveurs reprend un état disponible, l'interception du flux de données de service envoyé par le terminal utilisateur au serveur.

7. Passerelle locale selon la revendication 5 ou 6, dans laquelle l'unité de maintien est spécifiquement configurée pour supprimer le compte utilisateur et les informations d'état d'utilisateur temporaires du terminal utilisateur si aucune mise à jour des informations d'état d'utilisateur temporaires n'est détectée au cours d'une période de surveillance prédéfinie.

8. Système pour la survie de voix locales, comprenant :
une passerelle locale (52) selon l'une quelconque des revendications 5 à 7 ;
un terminal utilisateur (51) ; et
un serveur (53), dans lequel :
le terminal utilisateur est configuré pour envoyer un flux de données de service au serveur ; et
le serveur est configuré pour envoyer une réponse de service au terminal utilisateur.
